# EUROPEAN PATENT APPLICATION

(11) **EP 2 546 687 A1**
(43) Date of publication of application: **16.01.2013**
(21) Application number: 12250126.5
(22) Date of filing: 29.06.2012
(51) Int. Cl.: G02B 6/26, G02B 6/38

(54) **Optical connector and optical fiber coupling structure**

(30) Priority: 12.07.2011 JP 2011153621
(71) Applicant: Hosiden Corporation, Yao-shi, Osaka 581-0071 (JP)
(72) Inventor: Isoda, Takeshi, Yao-shi Osaka 581-0071 (JP)
(74) Representative: Beresford, Keith Denis Lewis

(57) **Abstract**

The invention provides an optical connector and an optical fiber coupling structure having a simple structure and capable of preventing occurrence of crosstalk. An optical connector A connects between optical fibers 100a and 100b each including internal optical paths 101a and 101b and external optical paths 102a and 102b. The optical connector A includes: a holder 1 to securely receive end potions of the first and second optical fibers 100a and 100b from first and second directions D1 and D2, respectively; and a translucent light guide 22 adapted to be interposed between the end faces of the internal optical paths 101a, 101b and/or the external optical paths 102a, 102b of the optical fibers, such that the end faces of the internal optical paths 101a, 101b of the first and the second optical fiber 100a, 100b are displaced from the end faces of the external optical paths 102a, 102b of the first and the second optical fibers 100a, 100b in a light axis direction.

## Description

The present invention relates to optical connectors for coupling optical fibers each including an external optical path and an internal optical path. The invention also provides optical fiber coupling structures.

In the field of robotics, robots capable of a variety of movements have been actively developed in recent years. Such a robot is typically expected to instantaneously perform a series of operations, such as scanning an internal/external world through a sensor at an end of the robot, processing data using a built-in computer, and operating a driving unit provided at the end.

As a medium for transmitting optical signals in such an application or other use, optical fibers with separate incoming and outgoing paths have been developed. An optical fiber of this type includes an internal structure having an external optical path and an internal optical path.

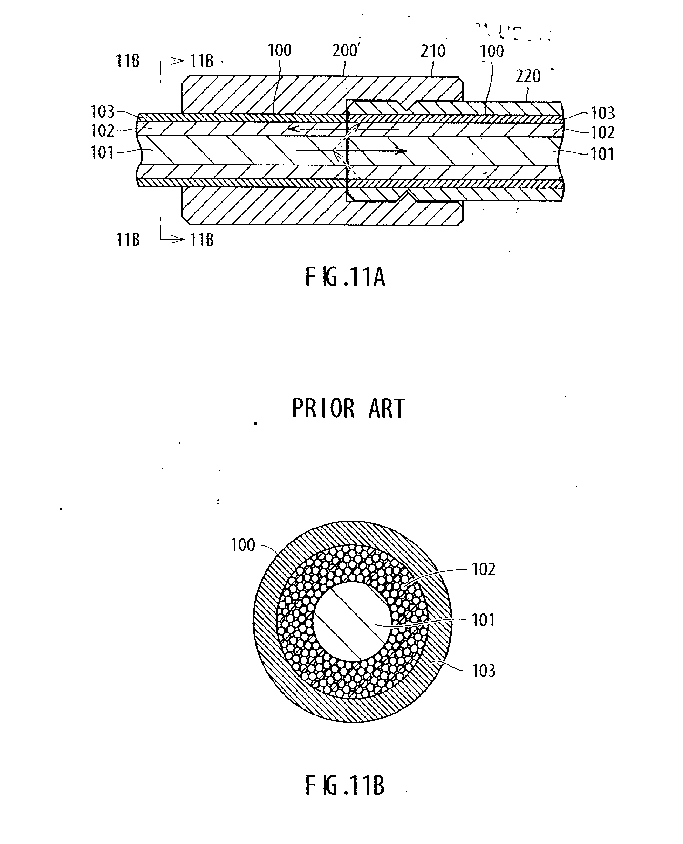

An example of a conventional optical connector used for such optical fibers is illustrated in Fig. 11A and Fig. 11B. An optical connector 200 shown is adapted to receive two optical fibers 100 at its opposite ends. Each optical fiber 100 has an internal optical path (on-axis path) 101, an external optical path (off-axis path) 102, and a coating 103. As illustrated in Fig. 11A, ends of the optical fibers 100 are evenly cut (such that end faces are flat).

The optical connector 200 includes a connector main body 210 attached to an end of one of the optical fibers 100 and a sleeve 220 attached to an end of the other optical fiber 100. Upon attachment of the sleeve 220 to the connector main body 210, end faces of the internal optical paths 101 of the optical fibers 100 come face to face with each other and end faces of the external optical paths 102 come face to face with each other, thereby connecting the optical fibers 100. Solid arrows in Fig. 11A represent traveling directions of optical signals transmitted through the internal optical path 101 and the external optical path 102 of the optical fibers 100 (examples of conventional coupling structures between multi-core optical fibers are disclosed in Japanese Unexamined Patent Application Publication No. 2010-286718 and other publications).

Unfortunately, the above conventional example may experience crosstalk. Particularly, the optical connector 200 may couple the two optical fibers 100 with very small gaps left between the end faces of the internal optical paths 101 and between the external optical paths 102, so that the gaps allow optical signals from the internal optical paths to find their way into the external optical paths, or vice versa, as indicated with dashed arrows in Fig. 11A.

It is not impossible to improve the optical connector to eliminate the gap, but such improvement would be likely to cause increased number of components and complicated structure. Accordingly, the cost for the optical connector would increase.

The present invention has been contrived in view of the above circumstances. An embodiment provides an optical connector having a simple structure and capable of preventing occurrence of crosstalk. An assembly of such an optical connector with optical fibers is also provided.

The present invention provides an optical connector for coupling a first optical fiber and a second optical fiber. Each of the optical fibers includes an external optical path and an internal optical path. The optical connector includes a holder and a light guide. The holder is configured to securely receive, in use, a distal end of a first optical fiber from a first direction and a distal end of a second optical fiber from a second direction that is opposite to the first direction. The light guide has translucency and is configured to be interposed, in use, between at least one of (i) end faces of the internal optical paths of first and second optical fibers and (ii) end faces of the external optical paths of first and second optical fibers, such that the end faces of the internal optical paths of first and second optical fibers inserted into the optical connector in use of the optical connector are longitudinally displaced from the end faces of the external optical paths of the first and the second optical fibers.

The optical connector has a longitudinal axis that is substantially parallel to the axial paths of light passing through optical fibers connected to the optical connector, in use. In the description that follows, the axial paths of light will be referred to as a light axis or light axis direction.

In the optical connector according to the first aspect of the invention, the end faces of the internal optical paths of inserted first and second optical fibers are displaced in the light axis direction from the end faces of the external optical paths of the first and the second optical fiber. As such, if inserted first and second optical fibers are coupled with a gap present at the end faces of the internal optical paths and/or at the end faces of the external optical paths, optical signals carried in one path will not be likely to enter into the other path. Therefore, the invention can prevent the occurrence of crosstalk between the internal optical paths and the external optical paths of the first and the second optical fiber. In addition, in use, the first and the second optical fibers are optically coupled with the translucent light guide interposed between the end faces of the internal optical paths and/or between the end faces of the external optical paths. Such a connector can be manufactured in a simple structure with a smaller number of components, contributing to reduced cost.

The light guide may include a tapered surface in an outer surface thereof. The tapered surface may be located near a portion of the light guide from which light may leak. The tapered surface may reflect leaked light substantially toward a light traveling direction, i.e., toward the light axis direction.

In the optical connector according to this aspect, the tapered surface of the outer surface of the light guide reflects light to reduce leakage of light, minimizing optical transmission loss.

The light guide may include an end face of lens-shape.

In the optical connector according to this aspect, the lens shape formed in the end face of the light guide can provide light collection or other functions as needed, minimizing optical transmission loss.

The holder may include a holder main body and a sleeve. The holder may be generally in a tubular shape with open ends to securely receive the distal end of the first optical fiber from the first direction. The sleeve may be generally in a tubular shape to securely receive the distal end of the second optical fiber from the second direction, the sleeve being attachable into the holder main body from the second direction.

The sleeve may include a housing attachable into the holder main body, the light guide of tubular shape, and a coupling portion interposed between the light guide and the housing to support the light guide within the housing. The light guide may include a first opening to receive the distal end of the internal optical path of the first optical fiber from the first direction, a second opening to receive the distal end of the internal optical path of the second optical fiber from the second direction, an edge of the first opening, against which the end face of the external optical path of the first optical fiber may abut from the first direction , and an edge of the second opening, against which the end face of the external optical path of the second optical fiber may abut from the second direction. The housing, the light guide, and the coupling portion may be formed as a unitary transparent body.

In the optical connector according to this aspect, the holder is provided with the light guide. Such a configuration can reduce the number of components and facilitates assembly of the connector, further contributing to reduction of cost.

The sleeve may further include a chamfer formed around a corner of the edge of the first opening on a side of the light traveling direction.

In the optical connector according to this aspect, the chamfer guides the distal end of the internal optical path of the first optical fiber as entering into the first opening of the sleeve, facilitating the insertion of the optical fiber. In addition, this aspect of the invention can minimize optical transmission loss because the chamfer on the side of the light traveling will reflect little light.

An optical fiber coupling structure (optical fiber module) of the invention includes a first optical fiber, a second optical fiber, and a light guide configured in any manner as described above. The first and second optical fibers each include an external optical path, an internal optical path, and an end formed such that a distal end of the internal optical path extends beyond that of the external optical path.

In the optical fiber coupling structure (optical fiber module) of this aspect of the invention, the end faces of the internal optical paths of the first and the second optical fiber are displaced in the light axis direction from the end faces of the external optical paths of the first and the second optical fiber. As such, if the first and the second optical fibers are coupled with a gap present at the end faces of the internal optical path and/or at the end faces of the external optical paths, optical signals carried in one path will not be likely to enter into the other path. Therefore, the invention can prevent the occurrence of crosstalk between the internal optical paths and the external optical paths of the first and the second optical fiber. In addition, the first and the second optical fibers are optically coupled via the translucent light guide interposed between the end faces of the internal optical paths and/or between the end faces of the external optical paths. Such a structure can be manufactured in a simple structure with a smaller number of components, contributing to reduced cost.

A chamfer may be provided at a corner of the distal end of the internal optical path of at least one of the first and the second optical fibers.

In the optical fiber coupling structure according to this aspect of the invention, the chamfer guides the distal end of the internal optical path of at least one of the first and the second optical fibers as entering into an opening of the light guide, thereby facilitating the insertion of the optical fibers.

The invention will now be described by way of example only and without limitation by reference to the drawings, in which:
Fig. 1 is a vertical cross-sectional view of an optical connector with optical fibers connected thereto according to an embodiment of the present invention, showing a state before connecting the optical fibers to each other.
Fig. 2 is a vertical cross-sectional view of the optical connector with optical fibers connected thereto, showing a state after connecting the optical fibers to each other.
Fig. 3 is a view corresponding to Fig. 2 for illustration of a first variant of the optical connector.
Fig. 4A is a front elevational view of a sleeve of a second variant of the optical connector.
Fig. 4B is a left side elevational view of the sleeve shown in Fig. 4A.
Fig. 4C is a right side elevational view of the sleeve shown in Fig. 4A.
Fig. 4D is a cross-sectional view of the sleeve shown in Fig. 4A taken along line 4D-4D in Fig. 4C.
Fig. 4E is a perspective view of the sleeve, as shown in Fig. 4A and attached with an optical fiber, and an associated holder, showing a state prior to connecting the sleeve to the holder.
Fig. 5 is a view of a third variant of the optical connector, corresponding to Fig. 2.
Fig. 6 is a vertical cross-sectional view of a sleeve of a fourth variant of the optical connector.
Fig. 7 is a view of a fifth variant of the optical connector, corresponding to Fig. 6.
Fig. 8 is a view of a sixth variant of the optical connector, corresponding to Fig. 1.
Fig. 9 is a view a seventh variant of the optical connector, corresponding to Fig. 2.
Fig. 10 is a view of an eighth variant of the optical connector, corresponding to Fig. 2.
Fig. 11A is a vertical cross-sectional view of a conventional optical connector with optical fibers connected thereto.
Fig. 11B is an end view taken along line 11B-11B in Fig. 11A.

In the description which follows, relative spatial terms such as "upper", "lower", "top'', ``bottom", "left", "right", "front", "rear", etc., are used for the convenience of the skilled reader and refer to the orientation of the optical connector and its constituent parts as depicted in the drawings. No limitation is intended by use of these terms, either in use of the invention, during its manufacture, shipment, custody, or sale, or during assembly of its constituent parts or when incorporated into or combined with other apparatus.

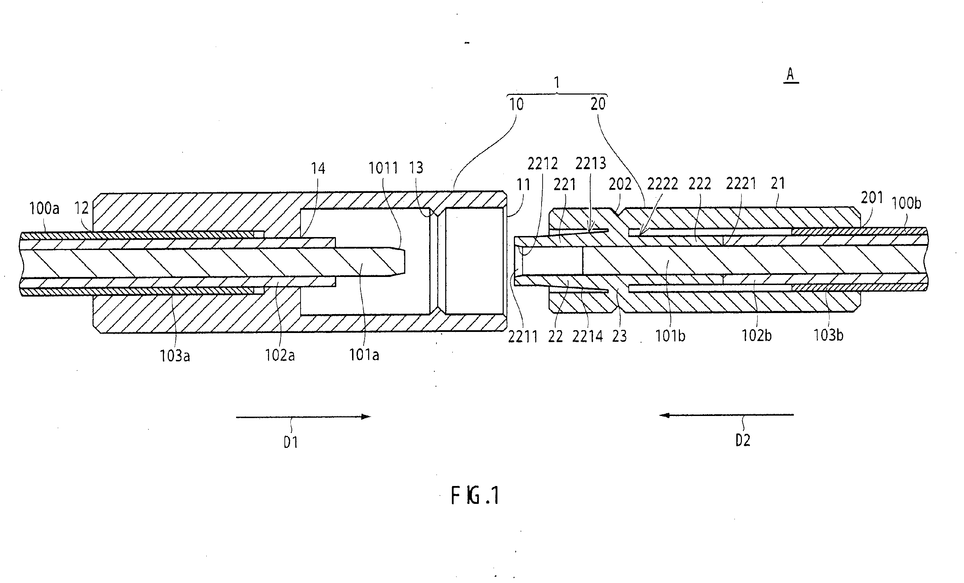

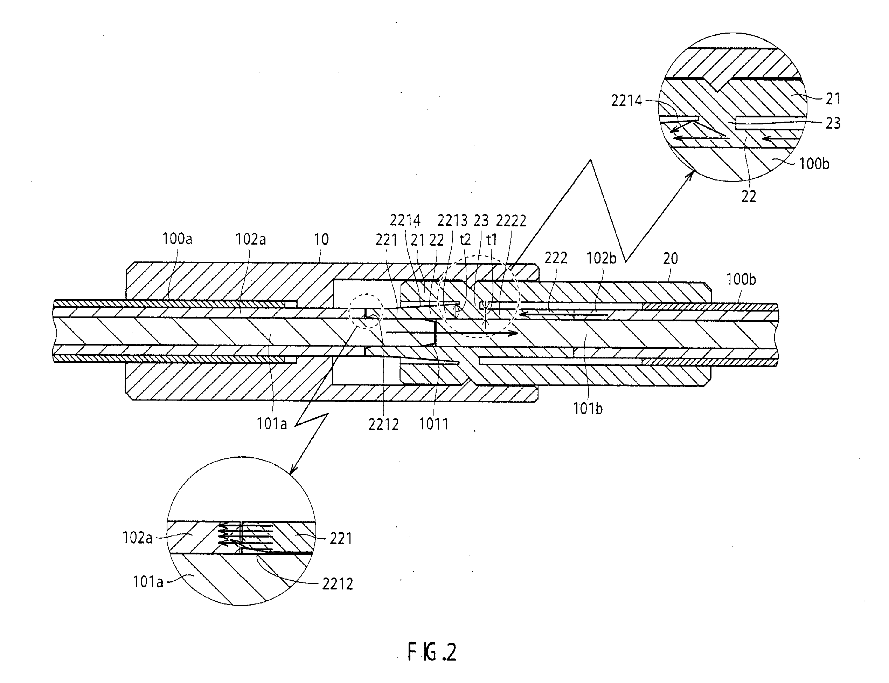

An embodiment of the present invention will be described below with reference to Fig. 1 and Fig. 2. An optical fiber coupling structure (optical fiber module) described herein as an example includes an optical connector A, a first optical fiber 100a, and a second optical fiber 100b. The optical connector A is used for bidirectional optical communication fibers each having a dual structure consisting of an outgoing path and an incoming path that extend coaxially. Specifically, the optical connector A is used for coupling the first optical fiber 100a and the second optical fiber 100b. For the convenience of explanation, Fig. 1 illustrates a first direction D1, as a connection direction of the first optical fiber 100a to the optical connector A, and a second direction D2, as a connection direction of the second optical fiber 100b to the optical connector A. The second direction D2 is opposite to the first direction D1.

The first and the second optical fibers 100a and 100b have internal structures including internal optical paths 101a, 101b (i.e. outgoing path or on-axis path), external optical paths 102a, 102b (i.e. incoming path or off-axis path) fitted around the internal optical paths 101a, 101b, and coating 103a, 103b coating the external optical path 102a, 102b, respectively. The external optical paths 102a, 102b are hollow multi-core optical fibers with center holes. The internal optical paths 101a, 101b are common single-core optical fibers received in the center holes of the external optical paths 102a, 102b. As shown Fig. 2, outgoing optical signals travel in the internal optical path 101a, 101b of the first and the second optical fibers 100 in the direction of the solid arrow (first direction D1), while incoming optical path signals travel in the external optical path 102a, 102b of the first and the second optical fibers 100 in the direction of the solid arrow (second direction D2).

As illustrated in Fig. 1 and Fig. 2, one of lengthwise ends (distal ends) of the first and the second optical fibers 100a, 100b is cut such that the distal ends of the internal optical paths 101a, 101b extend further in the first and second directions D1, D2, respectively, than the distal ends of the external optical paths 102a, 102b, respectively, and such that the distal ends of the external optical paths 102a, 102b extend further in the first and second directions D1, D2, respectively, than the distal ends of the coatings 103a, 103b, respectively. In other words, the distal ends of the external optical paths 102a and 102b protrude from the distal ends of the coatings 103a, 103b, respectively, in the first and second directions D1, D2, respectively. The distal ends of the internal optical paths 101a and 101b protrude from the distal ends of the external optical paths 102a and 102b, respectively, in the first and second directions D1, D2, respectively.

Further, the distal end of the internal optical path 101a (a distal end potion of the internal optical path on a side of a light traveling direction of the internal optical paths) is formed with a chamfer 1011 to serve as a guide, extending entirely around the corner of the distal end of the internal optical path 101 of the first optical fiber 100a.

The optical connector A is provided with a holder 1 to securely receive the distal end of the first optical fiber 100a from the first direction D1 and the distal end of the second optical fiber 100b from the second direction D2.

The holder 1 includes a holder main body 10 and a sleeve 20. The holder 1 is generally molded of resin, but only the sleeve 20 is transparent. The holder main body 10 is generally of tubular shape with open ends such as to securely receive the distal end of the first optical fiber 100a from the first direction D1 (from left side in the drawings). The sleeve 20 is generally of tubular shape such as to securely receive the distal end of the second optical fiber 100b from the second direction D2. The sleeve 20 is attachable into the holder main body 10 from the second direction D2.

The holder main body 10 is formed with a sleeve holding hole 1 l, opening at the end in the first direction D1 (at the right end in Fig. 1), and a fiber holding hole 12, opening at the end in the second direction D2 (a left end in Fig. 1). The diameter of the sleeve holding hole 11 corresponds to the outer diameter of a housing 21 of the sleeve 20 (that is, substantially equal to or slightly larger than the outer diameter of the sleeve 20). Accordingly, the sleeve holding hole 11 can securely receive an end portion of the sleeve 20. A projection 13 having a triangular cross-section extends entirely around the inner surface of the sleeve holding hole 11 for locking the sleeve 20 to the holder main body 10. The diameter of the fiber holding hole 12 corresponds to the outer diameter of the coating 103a of the first optical fiber 100a (substantially equal to or slightly larger than the outer diameter of the first optical fiber 100a). Accordingly, the fiber holding hole 12 can securely receive the distal end of the first optical fiber 100a. An opening 14 is provided between and in communication with the sleeve holding hole 11 and the fiber holding hole 12 of the holder main body 10. The diameter of the opening 14 corresponds to the outer diameter of the external optical path 102a of the first optical fiber 100a (substantially equal to or slightly larger than the outer diameter of the external optical path 102a). Accordingly, the opening 14 can receive the external optical path 102a and the internal optical path 101a of the first optical fiber 100a.

The sleeve 20 includes the housing 21, a light guide 22, and a coupling portion 23. The housing 21 of tubular shape is attachable into to the sleeve holding hole 11 of the holder main body 10. The light guide 22 is a transparent tube coaxially provided within the housing 21. The coupling portion 23 of annular shape is provided between the light guide 22 and the housing 21 so as to support the light guide 22 within the housing 21 coaxially. The housing 21, the light guide 22, and the coupling portion 23 are unitarily formed. When the first and the second optical fibers 100a, 100b are connected to the optical connector A, the light guide 22 is disposed between the end faces of the external optical paths 102a and 102b of the first and the second optical fibers 100a and 100b, such that the end faces of the internal optical paths 101a, 101b of the first and the second optical fibers 100a, 100b are displaced in a light axis direction from the end face of the external optical paths 102a, 102b of the first and the second optical fibers 100a, 100b.

The housing 21 has a depression 202 entirely around its outer surface. The depression 202 has a triangular cross-section so as to lock over the projection 13 of the holder main body 10. The housing 21 also has a fiber holding hole 201 at its rear end. The diameter of the fiber holding hole 201 corresponds to the outer diameter of the second optical fiber 100b (substantially equal to or slightly larger than the outer diameter of the second optical fiber 100b). Accordingly, the fiber holding hole 201 can securely receive the distal end of the second optical fiber 100b from the second direction D2.

The light guide 22 has first and the second openings 2211 and 2221 at opposite ends. The respective inner diameters of the first and the second openings 2211, 2221 correspond to the respective outer diameters of the internal optical paths 101a, 101b of the first and the second optical fibers 100a, 100b (substantially equal to or slightly larger than the outer diameters of the internal optical paths 101a, 101b). Accordingly, the first opening 2211 can receive the distal end of the internal optical path 101a of the first optical fiber 100a from the first direction D1, so that the end face of the external optical path 102a of the first optical fiber 100a is abuttable on an edge of the first opening 2211. The second opening 2221 can receive the distal end of the internal optical path 101b of the second optical fiber 100b from the second direction D2, so that the end face of the external optical path 102b of the second optical fiber 100b is abuttable on an edge of the second opening 2221.

The light guide 22 includes a front portion 221 and a rear portion 222. The front portion 221 includes the first opening 2211 and the edge of the first opening 2211, and the rear portion 222 includes the second opening 2221 and the edge of the second opening 2221. The front portion 221 and the rear portion 222 are positioned substantially forward and rearward, respectively, of the coupling portion 23 in the direction of light traveling through the light guide 22. The thickness (outer diameter) of the light guide 22 is not even along the light axis direction (the light traveling direction), and a base end 2213 of the front portion 221 and a base end 2222 of the rear portion 222 are mutually different in thickness. Particularly in this embodiment, the thickness t2 of the base end 2213 is larger than the thickness t1 of the base end 2222 (see Fig. 2). The outer surface of the front portion 221 is tapered all around to form a tapered surface 2214, such that the outer diameter of the front portion 221 is gradually reduced in the light traveling direction (in the second direction D2).

It should be noted that the tapered surface 2214 is positioned near the coupling portion 23 (leakable portion). Light propagating through the light guide 22 is reflected off the tapered surface 2214 to travel substantially in the light traveling direction (see a partially enlarged view on the upper side in Fig. 2). The tapered surface 2214 can thus reduce light leaking out through the coupling portion 23 into the housing 21.

The edge of the first opening 2211 of the front portion 221 of the light guide 22 (distal end potion on a side of the light traveling direction of the external optical path) is formed with a chamfer 2212 to serve as a guide, extending entirely around the corner of the edge of the first opening 2211. Specifically, the chamfer 2212 is formed entirely around the inner corner of the edge of the first opening 2211 such that the inner diameter of the edge gradually increases in the second direction D2. The chamfer 2212 of the light guide 22 and the chamfer 1011 of the first optical fiber 100a facilitate insertion of the distal end of the internal optical path 101a of the first optical fiber 100a into the first opening 2211 of the sleeve 20.

The optical connector A as described above may be connected to the first and second optical cables 100a, 100b in the following steps. First, the distal end of the first optical fiber 100a is securely inserted into the fiber holding hole 12 of the holder main body 10 from the first direction D1. As a result, the distal ends of the external optical path 102a and the internal optical path 101a of the first optical fiber 100a pass through the opening 14 of the holder main body 10 to be received in the sleeve holding hole 11. On the other hand, the distal end of the second optical fiber 100b is securely inserted into the fiber holding hole 201 of the sleeve 20 from the second direction D2. As a result, the distal end of the internal optical path 101b of the second optical fiber 100b is received in the second opening 2221 of the light guide 22 of the sleeve 20, and the end face of the external optical path 102b of the second optical fiber 100b abuts the edge of the second opening 2221 of the light guide 22. Fig. 1 illustrates this state.

Then, the sleeve 20 is inserted into the sleeve holding hole 11 of the holder main body 10 from the second direction D2, so that the projection 13 of the holder main body 10 is lockingly inserted into the depression 202 of the sleeve 20. As a result, the sleeve 20 is attached to the holder main body 10. At this time, the distal end of the internal optical path 101a of the first optical fiber 100a is received in the first opening 2211 of the light guide 22 of the sleeve 20, and the end face of the internal optical path 101a of the first optical fiber 100a is brought into abutment with the end face of the internal optical path 101b of the second optical fiber 100b. On the other hand, the end face of the external optical path 102a of the first optical fiber 100a is brought into abutment with the edge of the first opening 2211 of the light guide 22. Fig. 2 illustrates this assembled state.

In the assembled state, the first optical fiber 100a and the second optical fiber 100b are arranged such that only the end faces of the internal optical paths 101a and 101b face each other, and that the light guide 22 of the sleeve 20 is interposed between the end faces of the external optical paths 102a and 102b. The light guide 22 is a transparent tubular body of a diameter corresponding to those of the external optical paths 102a and 102b. With such arrangement of the first and the second optical fibers 100a and 100b, the end faces of the internal optical paths 101a, 101b of the first and the second optical fiber 100a, 100b are displaced in the light axis direction from the end faces of the external optical paths 102a, 102b of the first and the second optical fiber 100a, 100b. The above are exemplary steps of coupling the optical fiber 101a and the optical fiber 101b via the optical connector A.

The optical connector A and the optical fiber coupling structure (optical fiber module) as described above have may advantageous features. First, as illustrated in Fig. 2, the end faces of the internal optical paths 101a, 101b of the first and the second optical fibers 100a, 100b are displaced in the light axis direction from the end faces of the external optical paths 102a, 102b of the first and the second optical fibers 100a, 100b. If the first and the second optical fibers 100a, 100b are coupled with a gap present between the end faces of the internal optical paths 101a, 101b and/or at the end faces of the external optical paths 102a, 102b, optical signals carried in the internal optical paths 101a, 101b will not enter into the external optical paths 102a, 102b, or vice versa. Therefore, it is possible to prevent crosstalk between the internal optical paths 101a, 101b and the external optical paths 102a, 102b. In addition, the end faces of the external optical paths 102a and 102b are optically coupled via the sleeve 20 of the optical connector A, so that the optical connector A can be manufactured in a simple structure with a reduced number of components, thereby resulting in a reduced cost.

The optical connector A is also advantageous in effective transmission of optical signals. Particularly, light propagating along the external optical path 102b of the second optical fiber 100b into the light guide 22 of the sleeve 20 may diffuse near the coupling portion 23. However, as the light guide 22 has the tapered surface 2214 around its outer surface near the coupling portion 23, a major part of the propagating light returns back toward the light guide 22 as described above, minimizing deviation of light toward the housing 21. Moreover, the sleeve 20 has the chamfer 2212 for guiding around the distal end potion, on the side of the light traveling direction of the external optical path, of the front portion 221. Having a diameter gradually increasing in the light traveling direction, the chamfer 2212 is able to reflect light toward the light traveling direction (see a partially enlarged view on the lower side in Fig. 2). The chamfer 2212 thus minimizes optical transmission loss of the light propagating through the light guide 22. This advantageous effect also applies to the chamfer 1011 provided around the distal end of the first optical cable 100a. As the chamfer 101 is added on the distal end potion on the side of the light traveling direction of the internal optical path 101a, it is possible to minimize optical transmission loss of the light propagating through the internal optical path 101 of the optical fiber 100.

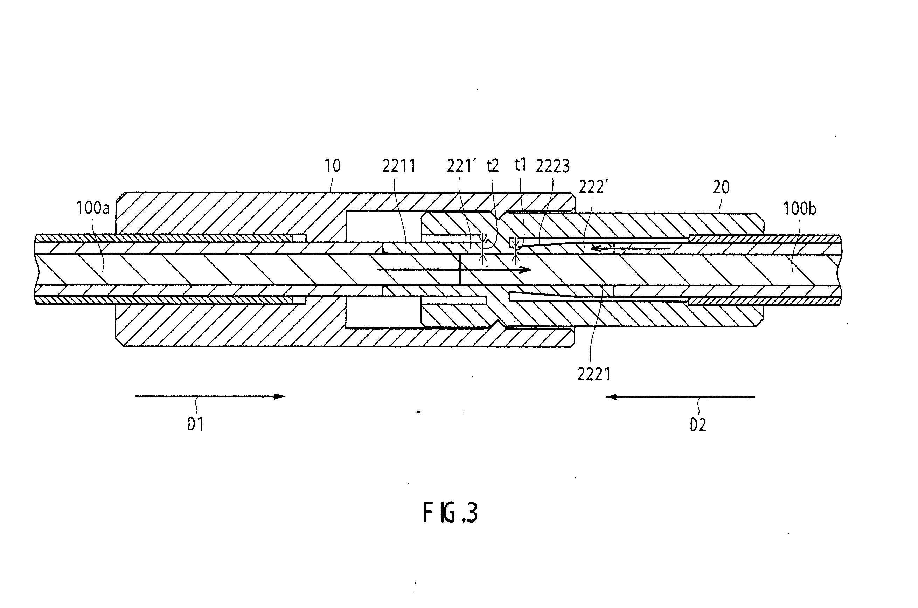

The connector A described as an exemplary embodiment above may be modified within the scope of claims. Fig. 3 to Fig. 10 illustrate first to sixth variants of the connector. The following descriptions will deal mainly with differences from the embodiment.

In the optical connector A according to the embodiment described above and illustrated in Fig. 1 and Fig. 2, the front portion 221 of the light guide 22 of the sleeve 20 has a tapered outer surface 2214 and has the thickness t2 at the base end 2213, while the rear portion 222 of the light guide 22 has the outer surface parallel to the inner surface and has the uniform thickness t1.

This is in contrast with the first variant of the optical connector A as illustrated in Fig. 3. Provided that light travels through the internal optical paths and the external optical paths in the same directions as those in the embodiment illustrated in Fig. 1 and Fig. 2 (forward light direction type), a front portion 221' of the first variant has an outer surface parallel to the inner surface and has the uniform thickness t2. A rear portion 222' has an inverse-tapered outer surface 2223 and has the thickness t1 (< t2) at its distal end. The tapered surface 2223 is provided entirely around the outer surface of the rear portion 222' such that the outer diameter of the rear portion 222' is gradually reduced in the light traveling direction of the external optical path (i.e. in the second direction D2).

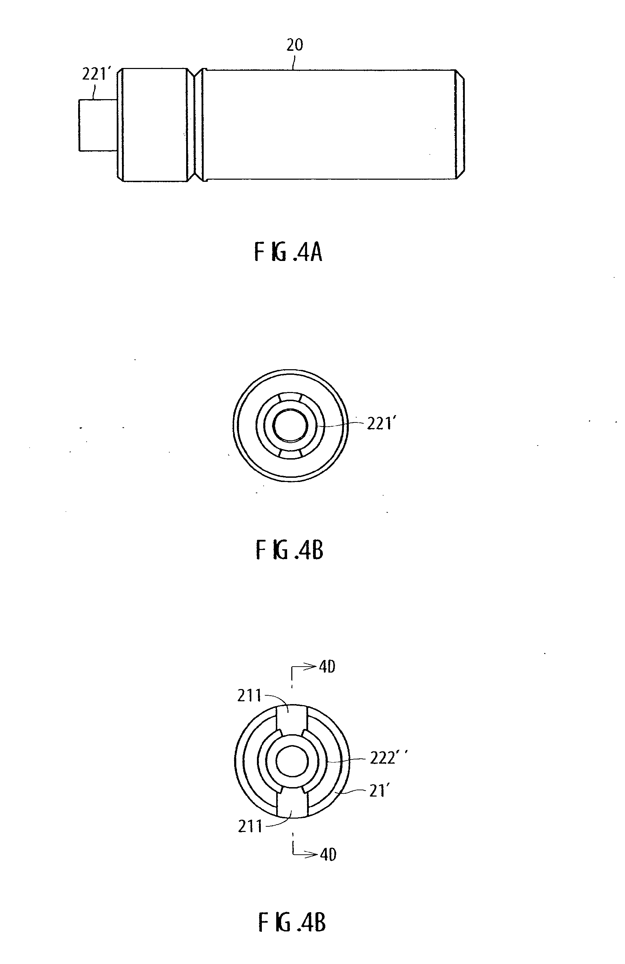

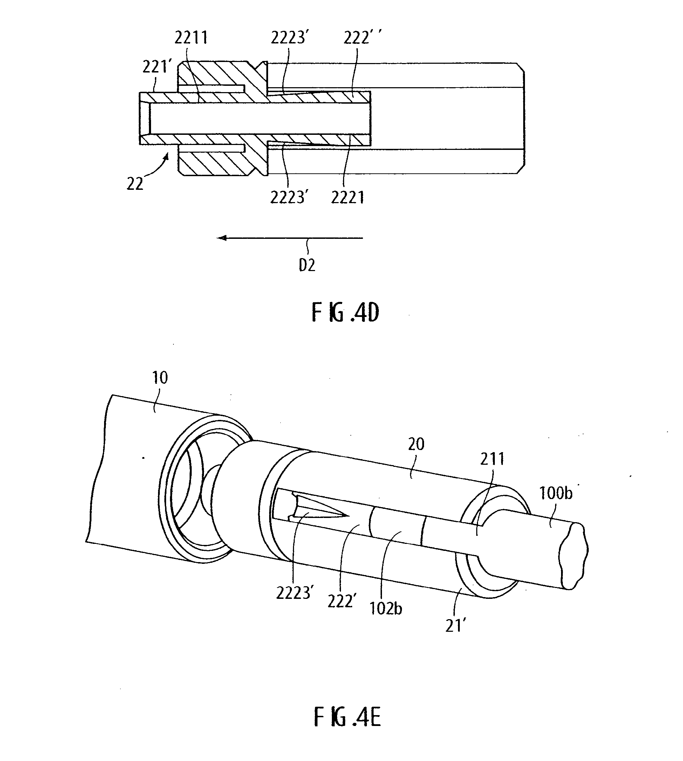

Figs. 4A, 4B, 4C, 4D, and 4E illustrate a second variant of the optical connector A. In this variant, unlike the first variant in which the rear portion 222' has an inverse-taper around its outer surface, a rear portion 222" has an outer surface that is inverse-tapered only at two points to form tapered surfaces 2223'. The second variant is different from the first variant only in this respect. More specifically, the tapered surfaces 2223' are slopes of grooves having triangular cross-sections, provided along the length of the outer surface of the rear portion 222". The tapered surfaces 2223' face elongated holes 211, which are oppositely provided in a housing 21' along its length. The tapered surfaces 2223' slope down in the light traveling direction of the external optical path (the second direction D2).

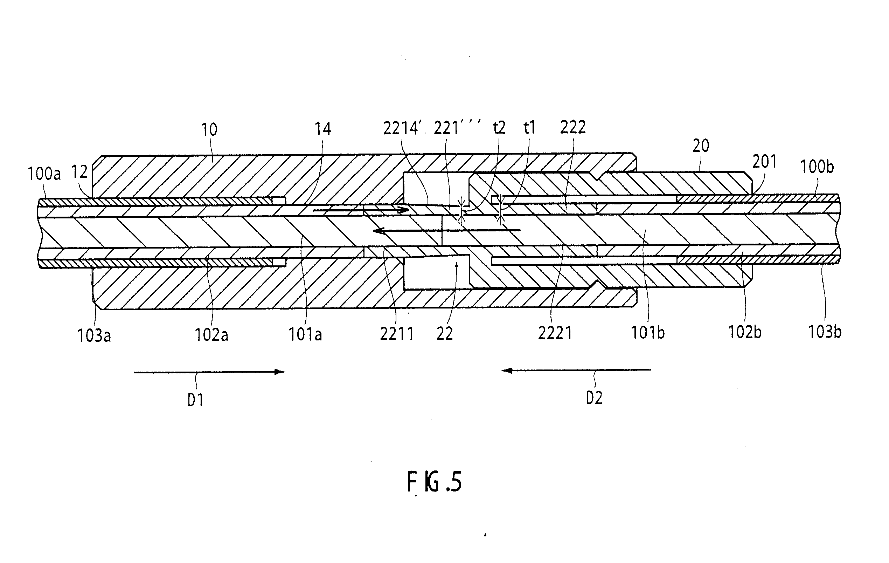

Fig. 5 illustrates a third variant of the optical connector A. Provided that light travels through the internal optical paths and the external optical paths in the opposite directions to those in the embodiment illustrated in Fig. 1 and Fig. 2 (reverse light direction type), a front portion 221"' has an inverse-tapered outer surface (a tapered surface 2214') and has the thickness t2 at its base end, while the rear portion 222 has an outer surface parallel to the inner surface and has a uniform thickness t1 (> t2). The front portion 221" has the tapered surface 2214' around its outer surface such that the outer diameter of the front portion 221"' is gradually reduced in the light traveling direction of the external optical path (i.e. the first direction D1). Further, the front portion 221"' is adapted to be received in the opening 14 of the holder main body 10. The third variant is different from the second variant illustrated in Fig. 3 only in these respects.

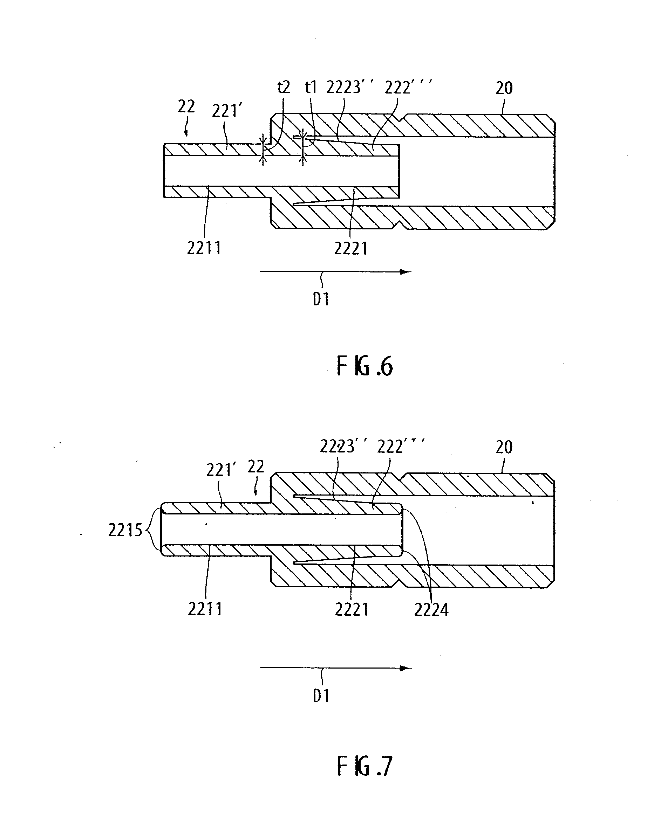

In the reverse light direction type described above, an alternative sleeve 20 as illustrated in Fig. 6 may be used to achieve the same effect as in the third variant illustrated in Fig. 5. In a fourth variant illustrated in Fig. 6, the front portion 221' has an outer surface parallel to the inner surface and has an uniform thickness t2, while a rear portion 222'' has an inverse-tapered outer surface (a tapered surface 2223") and has a thickness t1 (>t2) at its distal end. The fourth variant is different from the third variant illustrated in Fig. 5 only in these respects. The rear portion 222'' has the tapered surface 2223" around its outer surface such that the outer diameter of the rear portion 222"' is gradually reduced in the direction opposite to the light traveling direction (in the first direction D1).

The second, the third, and the fourth variants can achieve similar effects to those of the optical connector A according to the above embodiment. Particularly, as the sleeve 20 of each variant has the tapered surfaces 2223, 2233', 2214', and 2223", respectively that can reflect light, which could have leaked from the light guide 22 into the housing 21 through the coupling portion 23, substantially toward the light traveling direction. Accordingly, each of the variants can minimize optical transmission loss of the light propagating through the light guide.

Further, the sleeve 20 according to the fifth variant illustrated in Fig. 7 is different from the sleeve 20 illustrated in Fig. 6 in the following respects. In the fifth variant, the end faces (i.e., the end faces of the opening edges of the front portion 221" and the rear portion 222" on the distal end side of the light guide 22) are formed in lens shape. The end faces may be formed as illustrated, particularly the edges of the openings of the light guide 22 may be formed in convex curvature as lens shapes 2215 and 2224 so as to provide a light collecting function. The lens shapes 2215 and 2224 face the respective end faces of the external optical paths 102a and 102b of the first and the second optical fibers 100a and 100b. The provision of the lens shapes 2215 and 2224 contributes to improvement of transmission efficiency of light propagating through the external optical paths 102a, 102b of the first and the second optical fibers 100a, 100b. This only requires a slight design change in the shape of the light guide 22 of the sleeve 20, and it is therefore possible to realize both the reduced cost and improved performance of the optical connector. The lens shape may be of any shape suitable for light collection and divergence, or the like.

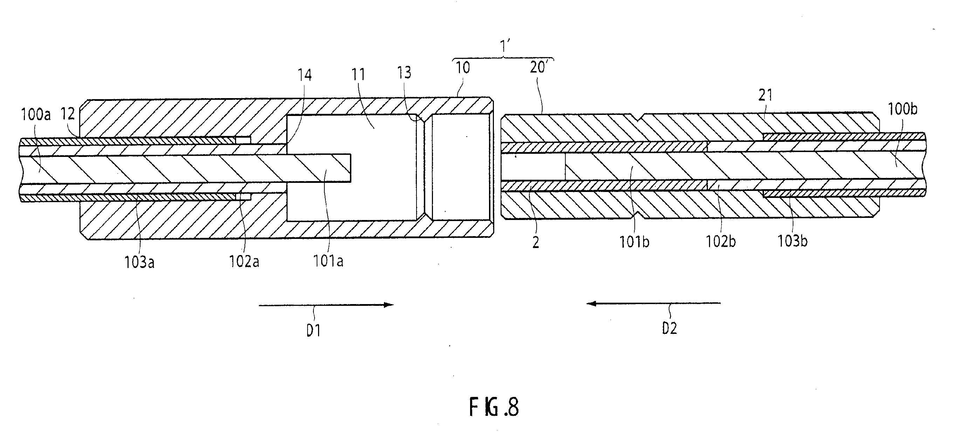

Moreover, the optical connector A according to the embodiment described above is configured such that the sleeve 20 of the holder 1 includes the light guide 22. However, the optical connector of the invention may be modified as in the optical connector of a sixth variant illustrated in Fig. 8. Particularly, a light guide 2 is provided separately from a sleeve 20' of a holder 1'. The holder 1' includes the holder main body 10 and the sleeve 20'. The sleeve 20' is different from the sleeve 20 illustrated in Fig. 1 only in that the light guide 22 and the coupling portion 23 are omitted. The light guide 2 is a tuboid transparent member to be accommodated in the sleeve 20' and interposed between the end faces of the external optical paths 102a and 102b of the first optical fiber 100a and the second optical fiber 100b. The light guide 2 may have the same configuration and functions as the light guide 22.

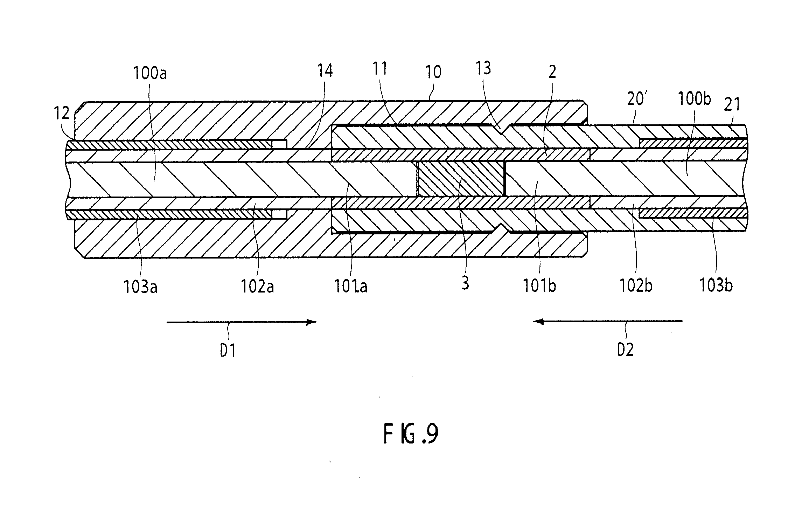

A seventh variant as illustrated in Fig. 9 has the same configurations as the sixth variant, except that the optical connector of the seventh variant further includes a light guide 3 in addition to the light guide 2. The light guide 3 is a cylindrical transparent member to be interposed between the end faces of the internal optical paths 101a and 101b of the first optical fiber 100a and the second optical fiber 100b. The sixth and the seventh variants may also provide the same effects as the embodiment described above because the end faces of the internal optical paths 101a, 101b are displaced in the light axis direction from the end faces of the external optical path 102a, 102b of the first and the second optical fibers 100a, 100b.

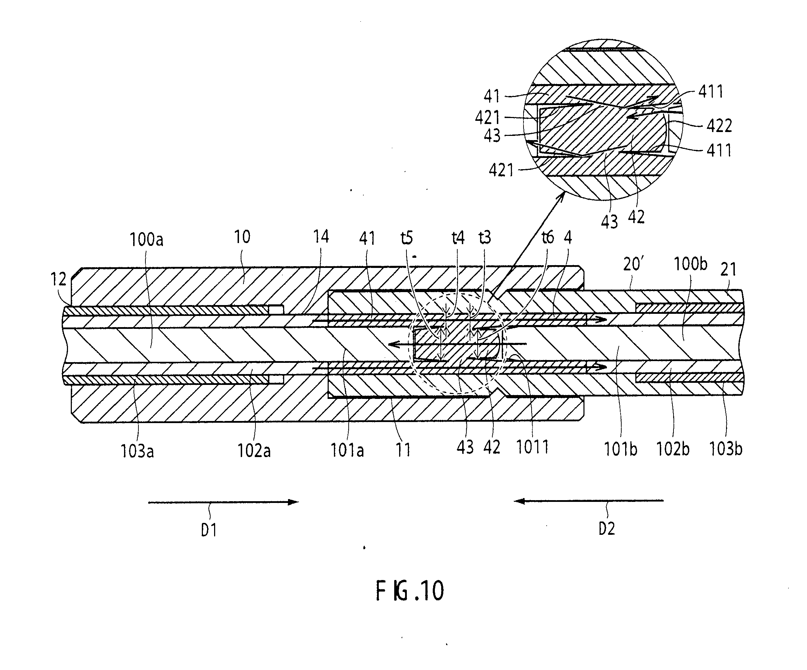

The optical connector of the seventh variant includes the light guide 2 and the light guide 3 as separate components. In an eighth variant as illustrated in Fig. 10, the optical connector includes a light guide 4 in place of the light guide 2 and the light guide 3.

The light guide 4 according to the eighth variant includes a tuboid light guide 41 interposed between the end faces of the external optical paths 102a and 102b of the first optical fiber 100a and the second optical fiber 100b, a cylindrical light guide 42 interposed between the end faces of the internal optical paths 101a and 101b of the first optical fiber 100a and the second optical fiber 100b, and a coupling portion 43 interposed between the light guide 42 and the light guide 41 to support the light guide 42 within the light guide 41. The light guide 4 is provided as a transparent body in which the light guide 41, the light guide 42, and the coupling portion 43 are integrated.

The light guide 41 and the light guide 42 of the light guide 4 is provided with tapered surfaces 411 and 421, respectively, to provide the same functions as described above (see a partially enlarged view in Fig. 10). Specifically, the light guide 41 includes a rear portion and a front portion positioned rearward and forward, respectively, of the coupling portion 43 in the light traveling direction. The rear portion has an inner surface parallel to the outer surface and has a uniform thickness t4. The front portion has a thickness t3 (>t4) at its rear end and its inner surface is tapered to form a tapered surface 411 such that the inner diameter of the front portion is gradually expanded in the light traveling direction (in the first direction D1). It should be noted that the tapered surface 411 is positioned near the coupling portion 43 (leakable portion), so that light that propagating through the light guide 41 is reflected substantially toward the light traveling direction, reducing light leaking through the coupling portion 43 out into the light guide 42. Further, the light guide 42 a rear portion and a front portion positioned rearward and forward, respectively, of the coupling portion 43 in the light traveling direction. The rear portion has an outer surface parallel to the light traveling direction and has a uniform diameter t6, while the front portion has a tapered outer surface (the tapered surface 421) and has a diameter t5 (> t6)) at its base end. The tapered surface 421 is provided around the front portion such that the outer diameter of the front portion of the light guide 42 is gradually reduced in the light traveling direction (in the second direction D2). It should be noted that the tapered surface 421 is positioned near the coupling portion 43 (leakable portion), so that light propagating through the light guide 42 is reflected substantially toward the light traveling direction, reducing light leaking through the coupling portion 43 out into the light guide 41. In short, the light guide 4 is configured such as to prevent crosstalk of optical signals traveling through the light guide 4.

Another advantageous feature of the eighth variant is that the light guide 4 is provided with a lens-shape 422, similarly to the fifth variant illustrated in Fig. 7. As illustrated in the partially enlarged view in Fig. 10, the lens-shape 422 is a convex curvature provided at an end face of the light guide 42 of the light guide 4 to perform a light collecting function. The lens-shape 422 faces the internal optical path 101b of the second optical fiber 100b. The provision of the lens-shape 422 contributes to improvement of transmitting efficiency of light propagating through the internal optical path 101a, 101b of the first and second optical fibers 100a, 100b. This only requires a slight design change in the shape of the light guide 4, and it is therefore possible to realize both reduced cost and improved performance of the optical connector. The lens shape may be any shape suitable for light collection and divergence or the like. It is to be noted that in the eighth variant, the internal optical path 101b of the second optical fiber 100b is formed with a chamfer 1011 to serve as a guide, extending entirely around the corner of the distal end of the internal optical path 101b (the distal end potion of the internal optical path on the side of the light traveling direction). The light guide 4 may be modified to a unitary combination of the light guide 2 and the light guide 3.

It should be noted that the optical connector and the optical fiber coupling structure (optical fiber module) of the invention is not limited to the embodiment and its variants described above. Firstly, the optical fibers may be modified in accordance with its applications. For example, the optical fibers may be configured such that the internal optical paths (on-axis path) and the external optical paths (off-axis path) may not be concentric to each other. The external optical paths of the optical fibers may be of single core. Secondly, the holder may be of any shape that can securely receive the distal ends of the first and second optical fibers. Thirdly, the light guide may be of any configuration such as to have translucency and be interposed at least one of (i) between end faces of the internal optical paths of the first and the second optical fibers and (ii) between end faces of the external optical paths of the first and the second optical fibers, such that the end faces of the internal optical paths of the first and the second fibers are displaced from the end faces of the external optical paths of the first and the second optical fibers in a light axis direction. The light guides 2 and 3 and the sleeve 20 may be integrally formed. The light guide 4 and the sleeve 20 may be integrally formed. The light guide 22 of the optical connector A of the above embodiment and the light guide of the first to the fifth variants may be separately provided from the sleeve 20. The light guide may or may not be provided with a lens-shaped end face. If provided, the lens-shaped end face may be of any configuration such that it faces one of the end faces of the internal optical paths and the external optical paths of the first and the second optical fibers. The lens shape of the light guide may be modified in any manner such as to collect or diffuse light from an internal or external optical path and guide the light into the light guide. In the optical connector A of the above embodiment and the variants except the third to the fifth, the light guide may be modified such that its front portion can be inserted into the opening of the holder main body.

### Reference Signs List

A Optical Connector
   1 Holder
      10 Holder main Body
      20 Sleeve
      21 Housing
      22 Light guide
         221 Front portion
         222 Rear portion
      23 Coupling portion
100a, 100b Optical fiber
   101a, 101b Internal optical path (on-axis path)
   102a, 102b External optical path (off-axis path)
   103a, 103b Coating

## Claims

1. An optical connector (A) for coupling a first optical fiber (100a) and a second optical fiber (100b), each of the optical fibers including an external optical path (102a, 102b) and an internal optical path (101a, 101b), the optical connector comprising:
a holder (1) configured to receive a distal end of a first optical fiber from a first direction (D1) and a distal end of a second optical fiber from a second direction (D2) that is opposite to the first direction; and
a light guide (22) having translucency, configured to be interposed between at least one of:
(i) end faces of the internal optical paths of first and second optical fibers and
(ii) end faces of the external optical paths of the first and the
second optical fibers,
such that the end faces of the internal optical paths of inserted first and second fibers are displaced from the end faces of the external optical paths of the first and the second optical fibers in a light axis direction.

2. The optical connector (A) according to claim 1, wherein
the light guide (22) includes a tapered surface in an outer surface thereof, the tapered surface (2214, 2223) being located near a leakable portion of the light guide from which light may leak and being configured to reflect the light substantially toward a light traveling direction.

3. The optical connector (A) according to claim 1 or claim 2, wherein
the light guide (22) includes an end face of lens-shape (2215, 2224).

4. The optical connector (A) according to claim 1, wherein
the holder (1) includes:
a holder main body (10) generally in a tubular shape with open ends to receive the distal end of a first optical fiber (100a) from the first direction (D1); and
a sleeve (20) generally in a tubular shape to receive the distal end of a second optical fiber (100b) from the second direction (D2), the sleeve being attachable into the holder main body from the second direction (D2).

5. The optical connector (A) according to claim 4, wherein
the sleeve (20) includes:
a housing (21) attachable into the holder main body (10);
the light guide (22) of tubular shape including :
a first opening (2211) to receive the distal end of the internal optical path (101a) of a first optical fiber (100a) from the first direction (D1);
a second opening (2221) to receive the distal end of the internal optical path (101b) of a second optical fiber(100b) from the second direction (D2);
an edge of the first opening, against which the end face of the external optical path (102a) of a first optical fiber is abuttable from the first direction; and
an edge of the second opening, against which the end face of the external optical path (102b) of a second optical fiber is abuttable from the second direction; and
a coupling portion (23) interposed between the light guide and the housing to support the light guide within the housing, wherein
the housing, the light guide, and the coupling portion are formed as a unitary transparent body.

6. The optical connector (A) according to claim 4 or claim 5, wherein
the sleeve (20) further includes a chamfer (2212) formed around a corner of the edge of the first opening (2211) on a side of the light traveling direction.

7. An optical fiber coupling structure comprising:
a first optical fiber (100a) and a second optical fiber (100b), the optical fibers each including:
an external optical path (102a, 102b),
an internal optical path (101a, 101b), and
an end formed such that a distal end of the internal optical path
extends beyond that of the external optical path; and
the optical connector (A) according to one of claims I to 6.

8. The optical fiber coupling structure according to claim 7, wherein
a chamfer (1011) is provided at a corner of the distal end of the internal optical path (101a, 101b) of at least one of the first (100a) and the second (100b) optical fibers.
